# EUROPÄISCHE PATENTSCHRIFT

(11) **EP 0 650 007 B1**
(45) Veröffentlichungstag und Bekanntmachung des Hinweises auf die Patenterteilung: **23.09.1998**
(21) Anmeldenummer: 94112448.9
(22) Anmeldetag: 09.08.1994
(51) Int. Cl.: F16L 55/17, F16L 21/06

(54) **Rohrmuffe**
Tube connecting sleeve
Manchon d'accouplement pour tuyau

(30) Priorität: 26.10.1993 DE 4336528
(43) Veröffentlichungstag der Anmeldung: 26.04.1995
(73) Patentinhaber: gabo Systemtechnik GmbH, 94327 Bogen (DE)
(72) Erfinder: Bauer, Peter, Dipl.-Ing., D-94357 Konzell (DE); Helf, Walter, D-94315 Straubing (DE); Lederer, Roland, Dipl.-Ing. FH, D-93049 Regensburg (DE)

(56) Entgegenhaltungen:
- DE-U- 7 833 835
- GB-A- 790 109
- GB-A- 794 580
- US-A- 2 165 920
- US-A- 2 899 984
- US-A- 4 059 291

## Beschreibung

Die Erfindung bezieht sich auf eine Rohrmuffe aus zwei Halbschalen für Vollrohre und solche, die aus zwei Halbschalen zusammengesetzt sind, sogen. Reparaturrohre, wobei eine Dichtung zwischen der abzudichtenden Rohraußenwand und der Muffeninnenwand vorgesehen ist.

Derartige, aus zwei Halbschalen bestehende Rohrmuffen sind an sich bekannt. So zeigt das DE-GM 78 33 835.9 eine gattungsgemäße Rohrmuffe, bei der in den durch den Rohr-Außendurchmesser und den Muffenmittelteil-Innendurchmesser bestehenden Hohlraum sowie zwischen die Stoßstellen der beiden Halbschalen eine hochviskose Dichtmasse eingebracht ist.

Diese Rohrmuffen haben sich in der Praxis bewährt und werden in großen Stückzahlen, vor allem zum Abdichten von Kabelkanalrohren, eingesetzt. In der letzten Zeit hat sich die Technologie der Verlegung von Kabelkanälen insofern vollständig geändert, als jetzt Gleitöle zum Einziehen der Kabel verwendet werden, die die Dichtmasse chemisch angreifen indem sie diese anlösen und so, oft sehr rasch, zu Undichtigkeiten führen. Weiterhin hat sich gezeigt, daß die Viskosität der verwendeten Dichtmassen bei extremen Temperaturen starken Schwankungen unterliegt und dabei entweder zu weich oder zu fest ist.

Hier setzt die Erfindung ein.

Die Erfindung, die nachstehend in den Ansprüchen beschrieben ist, löst die Aufgabe, eine gattungsgemäße Rohrmuffe zu besitzen, die chemisch resistent und im Muffenkörper fest verankert ist, so daß beim Einziehen von Rohren in die Muffe die Dichtung nicht herausgeschoben wird und Temperaturschwankungen ohne Einfluß auf die Dichtwirkung und Verlegetechnik bleiben.

Die mit der Erfindung erzielten Vorteile liegen darin, daß deren Einsatz und Handhabung auf Baustellen unproblematisch ist, die Dichtung gegen in Gleitölen enthaltenen Lösungsmitteln resistent ist und diese fest in der Muffe verrastet ist, so daß ein Herausdrücken derselben bei Einschieben der Rohre unmöglich ist und eine Temperaturabhängigkeit der Dichtwirkung in den üblichen Winter- und Sommertemperaturbereichen, d.h. - 20 °C bis + 40 °C mit Sicherheit gegeben ist.

Die Erfindung ist nachstehend anhand eines in den Abbildungen dargestellten Ausführungsbeispieles näher erläutert.

Es zeigt:
- Fig. 1: ein Kabelkanalrohranordnung mit Muffen,
- Fig. 2: eine Draufsicht auf einen Querschnitt der Muffe,
- Fig. 3: eine Darstellung der Dichtmatte der Muffe und
- Fig. 4: eine Draufsicht mit Teillängsschnitt der Muffe.

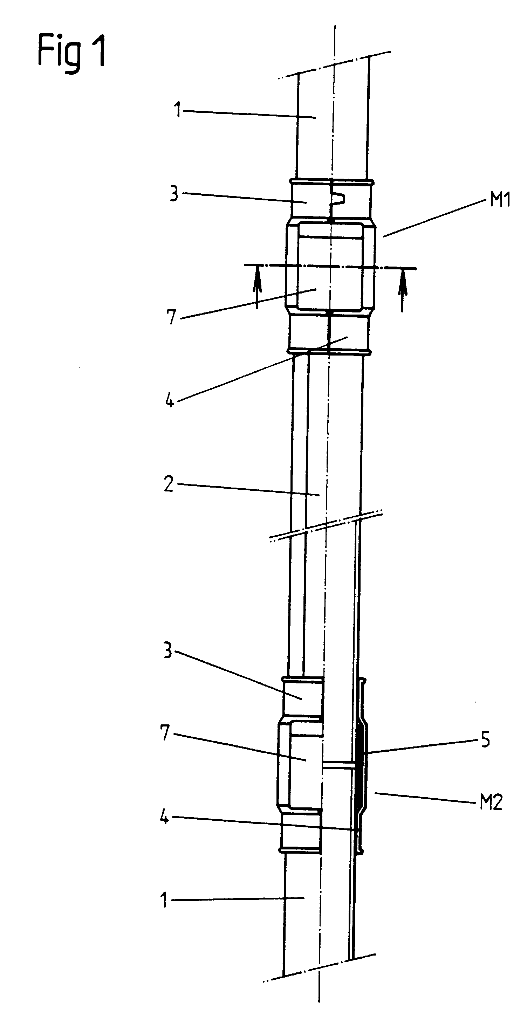

In der Figur 1 ist eine Kabelkanalrohranordnung dargestellt, bei der das Rohr 1 im Bereich zwischen den beiden Rohrmuffen M1 und M2 beschädigt und durch ein aus zwei Halbschalen 3,4 bestehendes Reparaturrohr 2 ersetzt ist. In den zwischen der Muffeninnenwand und der Außenwand der abzudichtenden Rohre verbleibenden Raum ist eine als Dichtmatte 5 ausgebildete Dichtung eingesetzt, die die Rohraußenwand 3,4 völlig umschließt.

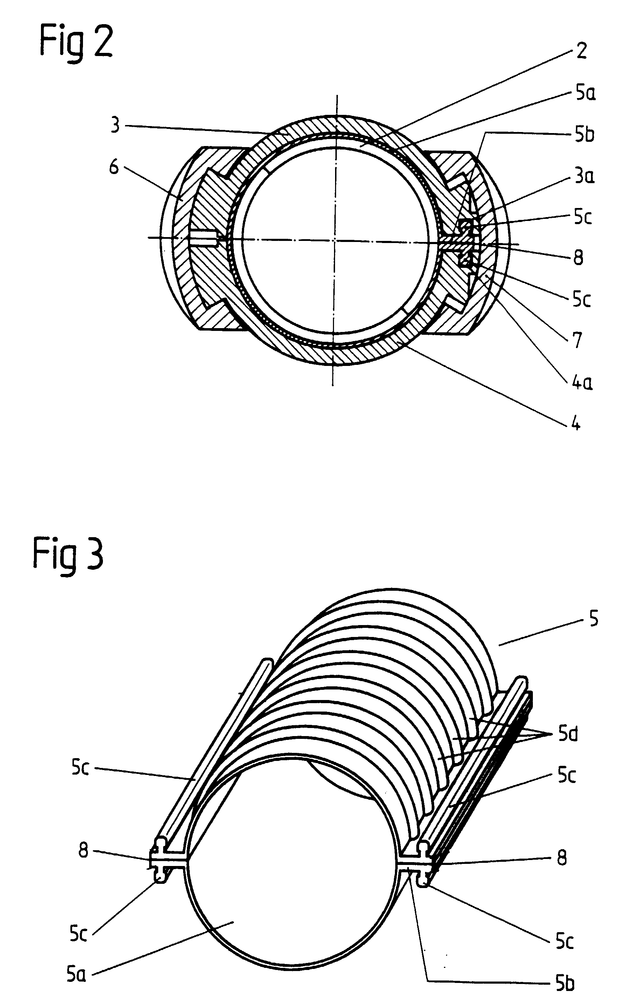

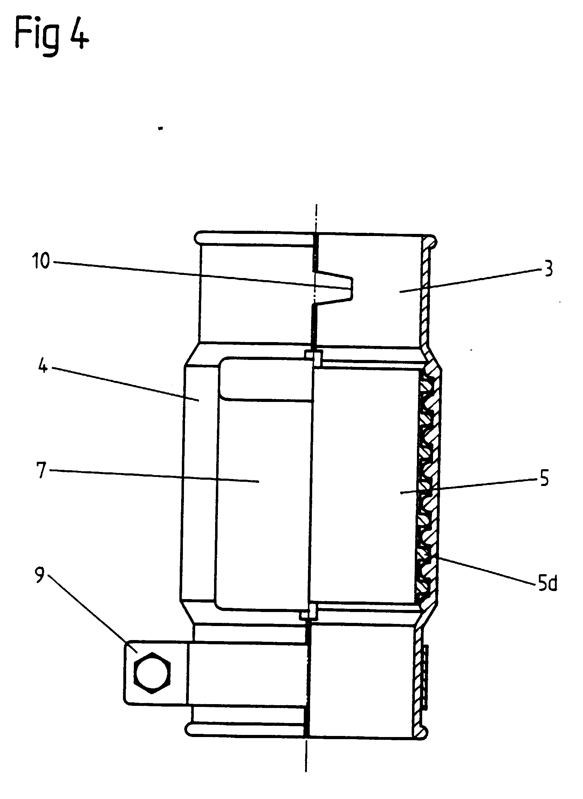

Die Figuren 2 und 4 zeigen einen Querschnitt bzw. Längsschnitt durch eine Rohrmuffe M, die im wesentlichen aus den beiden Halbschalen 3,4 mit der eingelegten Dichtmatte 5 und den Verschlußkeilen 6,7 besteht. Die Dichtmatte 5 ist dabei einteilig ausgebildet, an der axialen Teilungsstelle 8 offen und mit ihren beiden Wülsten 5c in die entsprechenden hinterschnittenen Nuten 3a,4a der Stirnseiten der Halbschalen 3,4 verrastet. Die Dichtmatte 5 kann auch, wie in Fig. 3 dargestellt, zweiteilig ausgebildet sein, wobei je eine Hälfte der Halbschale 3 und eine der Halbschale 4 zugeordnet ist. Entsprechend sind dann in
jeder Hälfte der Halbschalen 3,4 hinterschnittene Nuten 3a,4a für die Aufnahme der Wülste 5c der Dichtmatte 5 vorgesehen. Die Dichtmatte 5 ist, von ihrem zylindrischen Teil 5a ausgehend, über je einen angeformten Steg 5b mit dem Wulst 5c verbunden. Auf der Rückseite des zylindrischen Teiles 5a der Dichtmatte 5 sind Rippen 5d vorgesehen, die in passende rillenartige Vertiefungen in der Innenwand der Rohrmuffe eingreifen und somit ein Verschieben der Dichtmatte 5 beim Einziehen der Rohre 1,2 verhindern. Mit den Verschlußkeilen 6,7 werden die beiden Halbschalen 3,4 in bekannter Weise verbunden und auf die Rohre 1,2 gepreßt. Der erforderliche Anpreßdruck ist variabel einstellbar. Mit 9 ist eine zusätzliche Rohrschelle bezeichnet und mit 10 eine Arretiernase an der Halbschale der Rohrmuffe M.

Aus Fig. 3 ist die Form der Dichtmatte 5 in perspektivischer Darstellung ersichtlich.

## Patentansprüche

1. Rohrmuffe (M) aus zwei Halbschalen für Vollrohre und solche. die aus zwei Halbschalen (3,4) zusammengesetzt sind, sogen. Reparaturrohre, wobei eine Dichtung zwischen der abzudichtenden Rohraußenwand und der Muffeninnenwand vorgesehen ist, **dadurch gekennzeichnet, daß** zwischen abzudichtender Rohraußenwand und Rohrmuffeninnenwand, die die Rohraußenwand umschließende als Dichtmatte (5) ausgebildete Dichtung aus einem Elastomer oder weich eingestellten Thermoplast eingelegt ist, mindestens einmal in Richtung der Rohrachse geteilt ist und mit einem ebenfalls in Längsrichtung angeformten Wulst (5c) formschlüssig in einer hinterschnittenen Nut (3a) einer oder beider Halbschalen (3,4) der Rohrmuffe (M1,M2) verrastet ist.

2. Rohrmuffe nach Anspruch 1, **dadurch gekennzeichnet**, daß die Dichtmatte (5) eine glatte, der abzudichtenden Rohraußenwand zugewandte, Innenfläche (5a) besitzt und auf ihrer Rückseite vorstehende Rippen (5d) aufweist, die in entsprechende Vertiefungen der Rohrmuffeninnenwand eingreifen.

3. Rohrmuffe nach Anspruch 1 und 2, **dadurch gekennzeichnet**, daß die Dichtmatte (5) mittels eines oder zweier schwalbenschwanzförmiger Verschlußkeile (6,7) mit einem dosierbaren Anpreßdruck beaufschlagt ist.

## Claims

1. Pipe sleeve (M) made of two half-shells for one-piece pipes and for those assembled from two half-shells (3, 4), so-called repair pipes, with a seal being provided for between the pipe outer wall to be sealed and the inner wall of the pipe sleeve, **characterised in that** the seal surrounding the pipe outer wall, made of an elastomer or soft set thermoplast, and designed as sealing matting (5), is inserted between the pipe outer wall to be sealed and the inner wall of the pipe sleeve, is divided at least once in the direction of the pipe axis and is positively locked in position with a bead (5c), also formed lengthways, in an undercut groove (3a) of one or both half-shells (3, 4) of the pipe sleeve (M1, M2).

2. Pipe sleeve in accordance with Claim 1, **characterised in that** the sealing matting (5) has a smooth inner surface (5a) facing the pipe outer wall to be sealed, and has projecting ribs (5d) on its reverse side, said ribs engaging in corresponding indentations on the inner wall of the pipe sleeve.

3. Pipe sleeve in accordance with Claims 1 and 2, **characterised in that** adjustable contact pressure is applied to the sealing matting (5) by means of one or two dovetailed closing wedges (6, 7).

## Revendications

1. Le manchon de tuyau (M) se compose de deux demi-coques pour tuyaux pleins et pour les tuyaux dit de réparation qui sont assemblés à partir de deux demi-coques (3,4) ; une garniture étanche est prévue entre la paroi externe du tuyau à étancher et la paroi interne du manchon. Le manchon de tuyau (M) est **caractérisé par le fait** qu'une garniture d'étanchéité, faisant office de masse d'étanchéité (5), est logée entre la paroi exteme du tuyau à étancher et la paroi interne du manchon de tuyau. Cette garniture étanche encercle la paroi externe du tuyau, et son matériau est en élastomère ou dans une matière thermoplastique. Elle est séparée au moins une fois en direction de l'axe du tuyau, et un bourrelet (5c), également moulé dans le sens longitudinal, vient se loger dans les crans de blocage d'une gorge (3a, 4a) contre-dépouillée de l'une ou des deux demi-coques de manchon de tuyaux (M1, M2).

2. Manchon de tuyau selon spécifications 1, **caractérisé par le fait** que la masse d'étanchéité (5) possède une surface interne (5a) lisse dirigée vers la paroi externe du tuyau à étancher. De plus, cette masse d'étanchéité est pourvue à l'arrière de nervures en saillie qui s'emboîtent dans les encoches correspondantes de la paroi interne du manchon de tuyau.

3. Manchon de tuyau selon spécifications 1 et 2, **caractérisé par le fait** la masse d'étanchéité (5) est plaquée avec une force de serrage réglable au moyen d'une ou deux clavettes de verrouillage (6,7) en queue d'aronde.
